# FASCICULE DE BREVET EUROPEEN

(11) **EP 0 918 150 B1**
(45) Date de publication et mention de la délivrance du brevet: **06.02.2002**
(21) Numéro de dépôt: 98402870.4
(22) Date de dépôt: 19.11.1998
(51) Int. Cl.: F02C 7/047, F16L 27/12

(54) **Dispositif de dégivrage pour capot d'entrée d'air de moteur à réaction**
Enteisungsvorrichtung für die Verkleidung des Lufteinlaufs eines Strahltriebwerkes
Deicing device for the air inlet fairing of a jet engine

(30) Priorité: 21.11.1997 FR 9714611
(43) Date de publication de la demande: 26.05.1999
(73) Titulaire: AEROSPATIALE MATRA, 75016 Paris (FR)
(72) Inventeur: Porte, Alain, 31770 Colomiers (FR)
(74) Mandataire: Bonnetat, Christian

(56) Documents cités:
- EP-A- 0 311 514
- CH-A- 417 245
- GB-A- 1 121 222
- US-A- 5 106 129

## Description

La présente invention concerne le dégivrage des capots d'entrée d'air de moteurs à réaction, notamment des moteurs d'aéronefs.

On sait que, en cas de besoin (prévention contre la formation de givre ou élimination de givre déjà formé), le bord d'attaque du capot d'entrée d'air de tels moteurs est dégivré par réchauffement par de l'air chaud sous pression, prélevé sur ledit moteur et amené audit bord d'attaque par un circuit de circulation d'air chaud sous pression.

A cet effet, un tel capot d'entrée d'air comporte :
- un bord d'attaque creux délimitant une chambre périphérique interne, fermée par une cloison interne (ou cadre) et pourvue d'au moins un orifice mettant en communication ladite chambre interne avec l'extérieur ; et
- une conduite, apte à être raccordée, du côté arrière opposé audit bord d'attaque, audit circuit de circulation d'air chaud sous pression et, du côté avant vers le bord d'attaque, à un injecteur injectant ledit air chaud sous pression dans ladite chambre interne.

Les dispositifs de connexion connus entre l'injecteur et la conduite sont généralement du type à piston ou à presse-étoupe. Cependant, étant donné que l'air chaud sous pression prélevé sur le moteur et amené par ledit circuit est à une température élevée, de l'ordre de 400°C, il est nécessaire d'utiliser des produits d'étanchéité spécifiques (joint à haute température) imposant :
- une raideur importante du joint par nature,
- un système de contrôle de compression du joint, et
- une surface d'appui dudit joint présentant un état de surface et une rigidité spécifiques.

Il en résulte que ces dispositifs de connexion connus sont lourds et complexes et qu'ils nécessitent une maintenance spécifique coûteuse, obligeant à prévoir une porte d'accès dans le capot de moteur et un outillage d'intervention, spécialement réservés à la maintenance desdits dispositifs de connexion.

Par ailleurs, la rigidité de ces dispositifs de connexion impose un alignement parfait de la conduite et de l'injecteur pour éviter tout risque de fuite. Cependant, les dilatations thermiques et les flexions structurales de la nacelle du moteur affectent cet alignement et engendrent des contraintes dans les structures environnantes.

La présente invention a pour objet de remédier à ces inconvénients.

A cette fin, selon l'invention, le dispositif de connexion étanche à l'air chaud sous pression, pour un capot d'entrée d'air de moteur à réaction, notamment pour aéronef, ledit capot d'entrée d'air étant pourvu de moyens de dégivrage de son bord d'attaque et comportant à cet effet :
- un bord d'attaque creux délimitant une chambre périphérique interne, fermée par une cloison interne et pourvue d'au moins un orifice mettant en communication ladite chambre interne avec l'extérieur ; et
- une conduite, apte à être raccordée, à son extrémité arrière opposée audit bord d'attaque, à un circuit d'air chaud sous pression et, à son extrémité avant vers ledit bord d'attaque, à un injecteur injectant ledit air chaud sous pression dans ladite chambre interne,
ledit dispositif de connexion étanche étant prévu pour raccorder ladite conduite audit injecteur, est remarquable en ce qu'il est constitué par un joint à rotule permettant des variations de positions longitudinales et angulaires de ladite conduite par rapport audit injecteur.

Ainsi, ledit dispositif de connexion n'étant plus rigide, il n'est plus nécessaire de prévoir un alignement parfait de la conduite avec l'injecteur et les contraintes mécaniques sont supprimées.

Dans un mode de réalisation avantageux, ledit dispositif de connexion comporte :
- une chambre cylindrique, ouverte à ses deux extrémités et solidaire dudit injecteur à son extrémité avant ; et
- une rotule creuse, solidaire de l'extrémité avant de ladite conduite et engagée à frottement dur dans ladite chambre cylindrique, à travers l'extrémité arrière de celle-ci.

On voit qu'ainsi l'extrémité avant de ladite conduite et ladite rotule creuse peuvent pivoter et être translatées axialement par rapport à ladite chambre cylindrique et audit injecteur, pour accepter les tolérances, les dilatations thermiques, les moments relatifs et les déformations structurelles. On remarquera de plus que ladite conduite se connecte à l'injecteur par simple emboîtement dans ladite chambre cylindrique.

Afin d'assurer une bonne étanchéité au joint à rotule conforme à la présente invention, tout en évitant des usures excessives, ledit joint peut comporter de plus les particularités suivantes :
- la paroi interne cylindrique de ladite chambre, contre laquelle est pressée ladite rotule, est revêtue d'un revêtement antifriction, qui peut être porté par une bague, de préférence montée de façon amovible dans ladite chambre cylindrique en vue de son remplacement ;
- la rotule creuse peut être réalisée en une matière métallique, légèrement élastique, ou bien peut être réalisée en une matière métallique rigide et porter un revêtement extérieur élastique. Ce revêtement élastique peut épouser la surface extérieure de ladite rotule, ou bien encore être séparée de celle-ci par un jeu, accroissant son élasticité. En variante, ladite rotule creuse peut porter un joint diamétral coopérant avec la paroi interne de ladite chambre cylindrique ;
- la rotule creuse peut faire partie d'une pièce, rapportée à l'extrémité avant de ladite conduite, par exemple par soudure ; et
- la chambre cylindrique peut comporter des moyens pour sa fixation et celle dudit injecteur sur ladite cloison interne, cette fixation pouvant être rigide ou bien permettre le flottement longitudinal de ladite chambre cylindrique par rapport à ladite cloison interne.

Par ailleurs, la présente invention concerne un capot d'entré d'air pour moteur à réaction, notamment pour un moteur d'aéronef, ledit capot d'entrée d'air étant pourvu de moyens de dégivrage de son bord d'attaque et comportant à cet effet :
- un bord d'attaque creux délimitant une chambre périphérique interne, fermée par une cloison interne et pourvue d'au moins un orifice mettant en communication ladite chambre interne avec l'extérieur ; et
- une conduite, apte à être raccordée, à son extrémité arrière opposée audit bord d'attaque, à un circuit d'air chaud sous pression et, à son extrémité avant vers ledit bord d'attaque, à un injecteur injectant ledit air chaud sous pression dans ladite chambre interne, ce capot d'entrée d'air étant remarquable en ce que, pour raccorder ledit injecteur à ladite conduite, il comporte un dispositif de connexion constitué par un joint à rotule permettant des variations de positions longitudinales et angulaires de ladite conduite par rapport audit injecteur.

Bien entendu, ce dispositif de connexion peut comporter toutes les particularités décrites ci-dessus.

Avantageusement, dans le capot d'entrée d'air conforme à la présente invention, l'extrémité arrière de ladite conduite, apte à être raccordée audit circuit d'air chaud, est fixée en position sur une autre cloison interne (ou cadre) dudit capot. Ainsi, ladite extrémité arrière occupe une position précise rendant aisée la connexion au circuit d'air chaud solidaire du moteur. Une telle fixation de ladite extrémité sur ladite autre cloison interne peut être rigide. Elle peut, en variante, permettre le coulissement longitudinal de ladite extrémité arrière de la conduite par rapport à ladite autre cloison interne.

Dans un mode particulier de réalisation, l'extrémité arrière de ladite conduite est solidaire d'une autre pièce rapportée comportant des moyens de fixation à ladite autre cloison et des moyens de raccord audit circuit d'air chaud.

De ce qui vient d'être décrit, on voit que, grâce à la présente invention, on obtient un circuit de dégivrage pour capot d'entrée d'air de moteur d'architecture pratiquement isostatique supprimant les contraintes thermiques et structurales et assurant dans le temps l'étanchéité à l'air chaud sous pression. Ce circuit de dégivrage ne comporte que peu de pièces et sa masse et son coût peuvent être optimisés. De plus, il s'adapte facilement aux tolérances et aux déformations structurales de l'environnement.

Les figures du dessin annexé feront bien comprendre comment l'invention peut être réalisée. Sur ces figures, des références identiques désignent des éléments semblables.

La figure 1 montre, en perspective éclatée, un moteur d'aéronef à réaction et ses différents capotages.

La figure 2 est une demi-coupe radiale agrandie d'un mode de réalisation du capot d'entrée d'air dudit moteur.

Les figures 3 à 6 illustrent quatre modes de réalisation du dispositif de connexion à rotule, conforme à la présente invention.

Les figures 7 et 8 illustrent deux variantes de connexion du capot d'entrée d'air au circuit d'air chaud.

La figure 9 montre une variante de fixation du dispositif de connexion à rotule sur ladite cloison interne.

Les figures 10 et 11 illustrent deux variantes de réalisation des moyens d'injection de l'air chaud dans le bord d'attaque du capot d'entrée d'air.

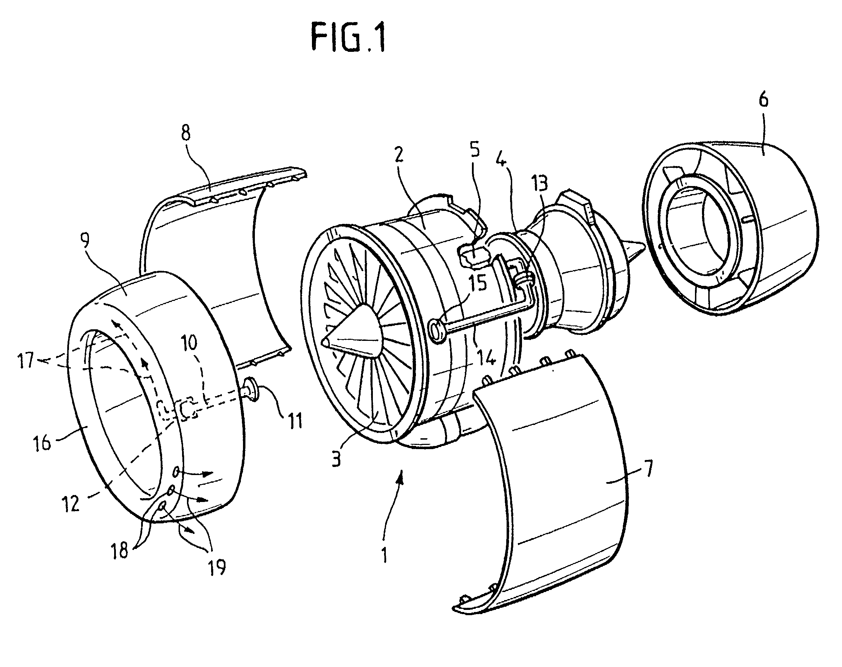

Le moteur à double flux 1 représenté schématiquement sur la figure 1 comporte, de façon connue, un générateur central d'air chaud 2, un ventilateur 3 et des étages de compresseurs 4, et il est pourvu d'une attache 5 de suspension à un mât de support (non représenté). Au moteur 1 sont associés et fixés un ensemble de tuyère 6, deux capots latéraux 7 et 8 et un capot d'entrée d'air 9.

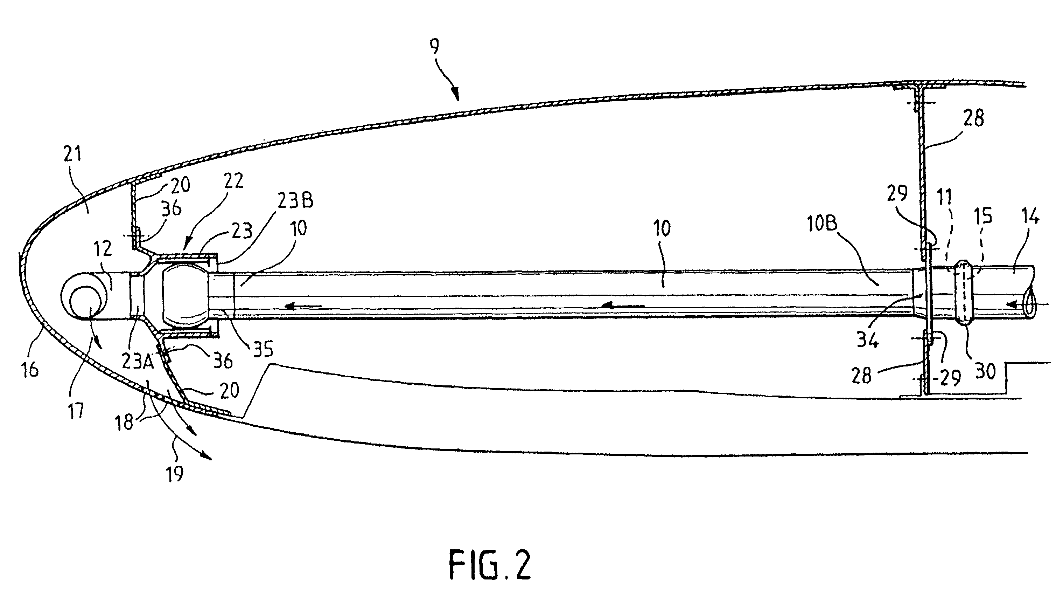

Comme cela est illustré schématiquement sur les figures 1 et 2, le capot d'entrée d'air 9 comporte une conduite interne 10, pourvue à son extrémité arrière 10B dirigée vers le moteur 1 d'un élément de raccord 11 et à son extrémité avant 10A logée dans le bord d'attaque creux 16 dudit capot d'entrée d'air d'un injecteur 12. Par ailleurs, sur un étage de compresseurs du moteur 1 est agencée une prise d'air chaud sous pression 13 qui est connectée à une conduite 14, pourvue, en regard de l'élément de raccord 11 de la conduite 10, d'un élément de raccord complémentaire 15.

Ainsi, lorsque les éléments de raccord 11 et 15 complémentaires sont reliés l'un à l'autre, de l'air chaud sous pression prélevé en 13 sur le moteur 1 est acheminé par les conduites 14 et 10 jusqu'à l'injecteur 12. Celui-ci peut donc souffler cet air chaud (flèches pointillées 17) à l'intérieur du bord d'attaque 16, pour le dégivrer. Des orifices 18 sont prévus pour l'évacuation à l'air libre (flèches 19) de l'air chaud ayant circulé à l'intérieur du bord d'attaque 16.

Comme le montre en détail et à plus grande échelle la demi-coupe radiale de la figure 2, le bord d'attaque creux 16 est fermé du côté arrière par une cloison interne 20, de sorte qu'une chambre périphérique annulaire 21 est formée à l'intérieur dudit bord d'attaque 16. L'injecteur 12 traverse la cloison interne 20 et injecte l'air chaud dans la chambre 21, les orifices 18 mettant en communication ladite chambre 21 avec l'extérieur.

Conformément à la présente invention, la connexion entre l'extrémité avant 10A de la conduite 10 et l'injecteur 12 est réalisée par un joint à rotule 22.

Le joint à rotule 22 comporte une chambre cylindrique ouverte 23 et une rotule creuse 24. La chambre cylindrique 23 est fixée de façon étanche à la cloison interne 20 et porte l'injecteur 12 à son extrémité avant 23A. La rotule creuse 24 est fixée à l'extrémité avant 10A de la conduite 10 et est introduite à frottement dur dans ladite chambre cylindrique 23, à travers l'extrémité arrière 23B de celle-ci. Ainsi, l'air chaud sous pression passe de la conduite 10 à l'injecteur 12, à travers la rotule creuse 24 et la chambre 23.

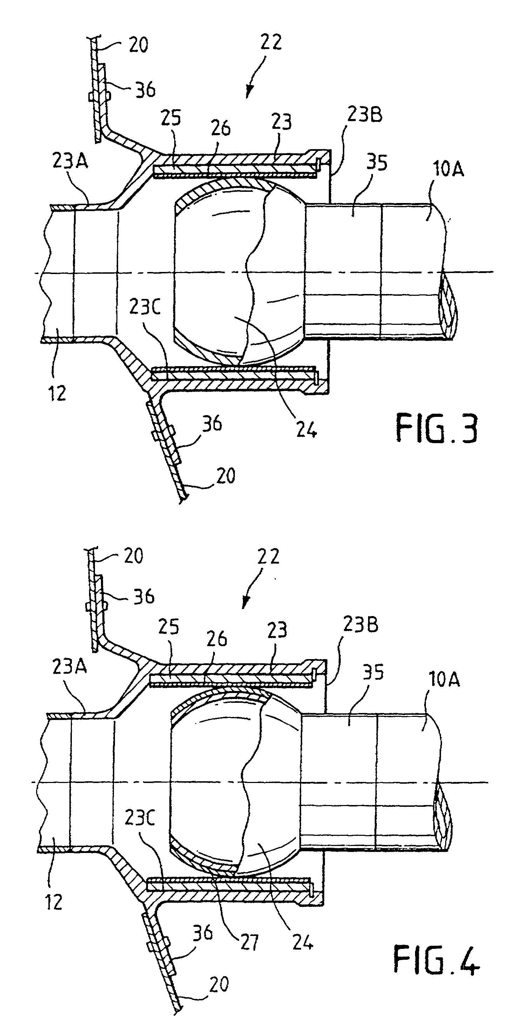

Dans les modes de réalisation représentés sur les figures 3 à 6, on peut voir que la chambre cylindrique 23 comporte une bague cylindrique 25 recouvrant la surface interne 23C de ladite chambre et portant un revêtement antifriction 26, par exemple à base de carbone ou de carbure de tungstène, formant la surface cylindrique d'appui de la rotule 24. La bague 25 est avantageusement fixée de façon amovible dans la chambre cylindrique 23, pour en faciliter le remplacement.

La rotule creuse 24 du mode de réalisation de la figure 3 est réalisée en un métal légèrement élastique, par exemple en un acier à ressort inoxydable. Ainsi, l'étanchéité à l'air chaud est assurée, au niveau du joint à rotule 22, par appui direct de la rotule 24 contre le revêtement antifriction 26 de la chambre cylindrique 23.

En revanche, dans la variante de réalisation de la figure 4, la rotule 24 est réalisée en matière métallique rigide, telle que l'alliage connu commercialement sous le nom INCONEL et résistant aux températures élevées et est recouverte d'un revêtement sphérique 27 en une matière métallique élastique, telle que le bronze. Dans ce cas, l'étanchéité à l'air chaud est assurée par la coopération du revêtement antifriction 26 et du revêtement sphérique élastique 27.

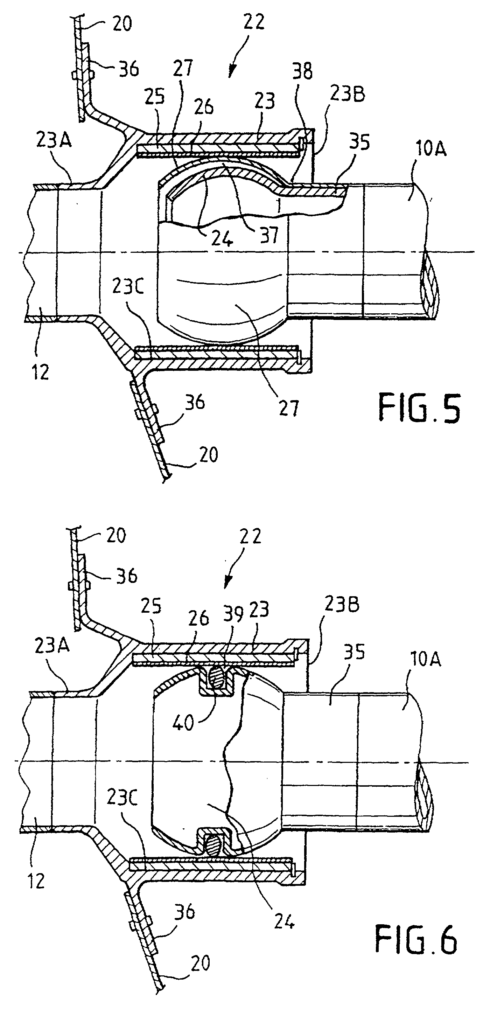

Dans la variante de réalisation de la figure 5, le revêtement sphérique élastique 27, au lieu d'épouser la forme externe de la rotule creuse 24, entoure cette dernière avec un jeu important 37. Bien entendu, le revêtement sphérique élastique 27 est solidarisé de la rotule creuse 24, en 38, du côté de celle-ci dirigé vers la conduite 10. On augmente ainsi l'élasticité du revêtement 27, qui peut être réalisé en INCONEL, éventuellement recouvert lui-même d'une couche de matière antifriction, comme le carbure de tungstène.

Dans le mode de réalisation de la figure 6, la rotule 24 comporte une gorge diamétrale 39, dans laquelle est maintenu prisonnier un joint d'étanchéité 40, par exemple réalisé à base de fibres de silice, de céramique ou de verre, coopérant avec le revêtement antifriction 26 de la bague 25.

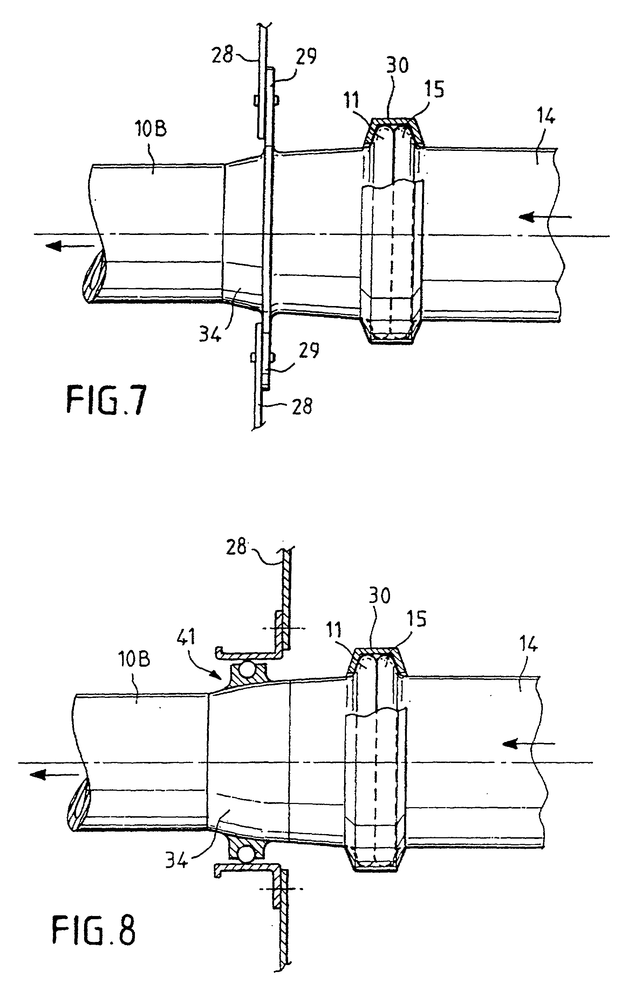

Du côté arrière (voir la figure 7), opposé au bord d'attaque 16, le capot d'entrée d'air 9 comporte une autre cloison interne 28, traversée par la conduite 10. Celle-ci comporte une bride 29, par exemple solidaire de l'élément du raccord 11, permettant de solidariser l'extrémité arrière 10B de la conduite 10 à ladite cloison interne 28 et d'assurer une position précise de l'élément de raccord 11 par rapport à l'élément de raccord 15. Les éléments de raccord 11 et 15, assemblés l'un à l'autre de manière étanche, peuvent être serrés l'un contre l'autre par un collier 30.

Par ailleurs, comme représenté sur les figures ci-dessus décrites, on remarquera qu'il est avantageux que l'élément de raccord 11 et la rotule 24 fassent respectivement partie de pièces 34 et 35, ces pièces étant respectivement fixées, par exemple par soudure, aux extrémités arrière 10B et avant 10A de la conduite 10. La bride 29 fait alors de préférence partie de la pièce 34. De même, l'injecteur 12 est avantageusement réalisé sous la forme d'une pièce individuelle rapportée, par exemple par soudure, à la chambre cylindrique 23 du joint à rotule 22. Pour sa fixation sur la paroi 20, cette chambre cylindrique 23 comporte, par exemple, une bride 36.

Sur la figure 8, on a représenté une variante de fixation de la pièce 34 sur la cloison interne 28. Dans cette variante, on prévoit un palier de coulissement 41 entre l'extrémité arrière 10B de la conduite 10 et ladite cloison interne 28. Ainsi, la cloison interne 28 peut maintenir radialement ladite extrémité arrière 10B par l'intermédiaire dudit palier 41, qui, de plus, permet à cette dernière de coulisser longitudinalement. Le palier 41 permet donc de profiter des degrés de liberté offerts par le joint à rotule 22 à la conduite 10, pour accepter les dilatations thermiques de la conduite 14 sans qu'il en résulte de contraintes dans ladite cloison 28.

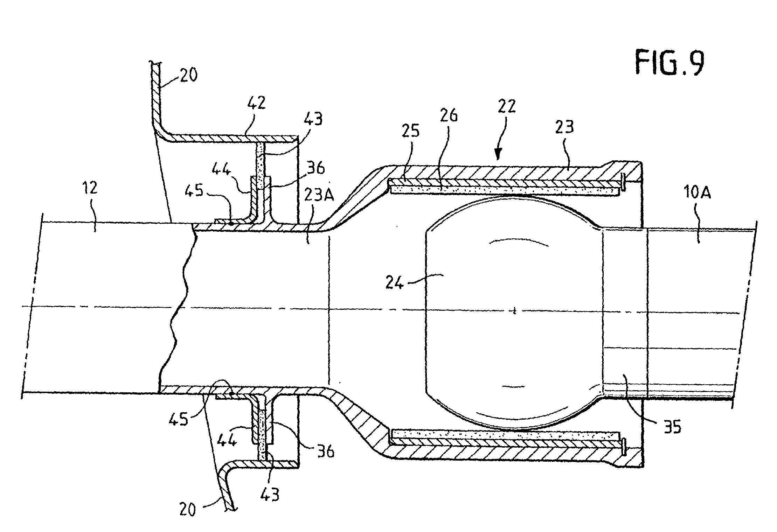

De façon semblable à ce qui vient d'être décrit ci-dessus à propos de l'extrémité arrière 10B de la conduite 10, il est possible de monter la chambre cylindrique 23 flottante longitudinalement pour éliminer, ou à tout le moins réduire, les contraintes longitudinales (par rapport à la conduite 10) exercées sur la paroi interne 20. On a représenté sur la figure 9, un tel dispositif de fixation à degré de liberté longitudinal, pouvant être utilisé en variante de celui représenté sur les figures 2 à 6.

Dans le dispositif de la figure 9, la cloison interne 20 comporte une partie cylindrique calibrée 42 (par exemple réalisée dans une pièce métallique rapportée à ladite cloison interne 20), dans laquelle est monté un piston d'étanchéité 43, solidarisé de la partie avant 23A de la chambre 23, par exemple à l'aide d'une collerette 44 emprisonnant le piston 43 entre elle et la bride 36. La collerette 44 peut être soudée en 45 sur la partie 23A et être réalisée en un acier à ressort. Le piston d'étanchéité 43 peut être constitué par un ou plusieurs segments d'étanchéité en bronze au beryllium ou en INCONEL.

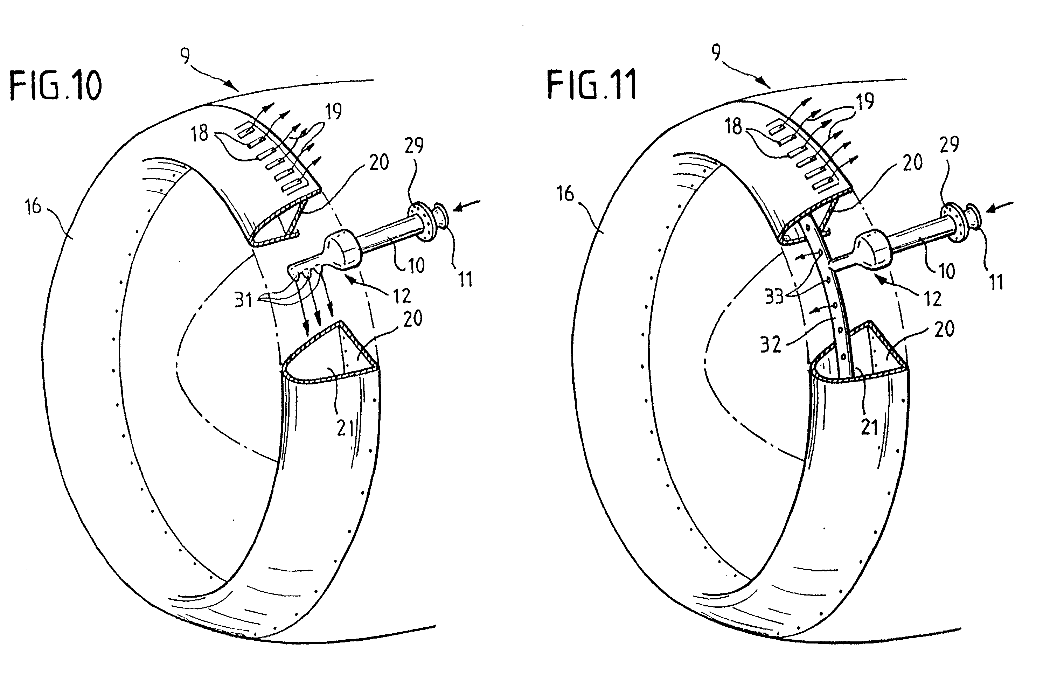

Sur les figures 1 et 2, on a représenté l'injecteur 12 sous la forme d'un simple tuyau coudé. Il va de soi qu'un tel injecteur peut présenter de nombreuses formes de réalisation. A titre d'exemples, sur les figures 10 et 11, on a représenté un injecteur 12 comportant une pluralité de buses d'injection 31 (figure 10) et un autre injecteur 12 comportant un anneau 32 à orifices 33 (figure 11).

## Revendications

1. Dispositif (22) de connexion étanche à l'air chaud sous pression, pour un capot d'entrée d'air (9) de moteur à réaction (1), notamment pour aéronef, ledit capot d'entrée d'air (9) étant pourvu de moyens de dégivrage de son bord d'attaque (16) et comportant à cet effet :
- un bord d'attaque (16) creux délimitant une chambre périphérique interne (21), fermée par une cloison interne (20) et pourvue d'au moins un orifice (18) mettant en communication ladite chambre interne (21) avec l'extérieur ; et
- une conduite (10), apte à être raccordée, à son extrémité arrière (10B) opposée audit bord d'attaque (16), à un circuit d'air chaud sous pression (14) et, à son extrémité avant (10A) vers ledit bord d'attaque (16), à un injecteur (12) injectant ledit air chaud sous pression dans ladite chambre interne (21),
ledit dispositif de connexion étanche (22) étant prévu pour raccorder ladite conduite (10) audit injecteur (12), **caractérisé en ce qu'**il est constitué par un joint à rotule (22) permettant des variations de positions longitudinales et angulaires de ladite conduite (10) par rapport audit injecteur (12).

2. Dispositif de connexion selon la revendication 1,
**caractérisé en ce qu'**il comporte :
- une chambre cylindrique (23), ouverte à ses deux extrémités (23A, 23B) et solidaire dudit injecteur (12) à son extrémité avant (23A) ; et
- une rotule creuse (24), solidaire de l'extrémité avant (10A) de ladite conduite (10) et engagée à frottement dur dans ladite chambre cylindrique (23), à travers l'extrémité arrière (23B) de celle-ci.

3. Dispositif de connexion selon la revendication 2,
**caractérisé en ce que** la paroi interne cylindrique (23C) de ladite chambre (23), contre laquelle est pressée ladite rotule, est revêtue d'un revêtement antifriction (26).

4. Dispositif de connexion selon la revendication 3,
**caractérisé en ce que** ledit revêtement antifriction (26) est porté par une bague (25) montée de façon amovible dans ladite chambre cylindrique (23).

5. Dispositif de connexion selon l'une des revendications 2 à 4,
**caractérisé en ce que** ladite rotule (24) est réalisée en une matière métallique, légèrement élastique.

6. Dispositif de connexion selon l'une des revendications 2 à 4,
**caractérisé en ce que** ladite rotule (24) est réalisée en une matière métallique rigide et porte un revêtement extérieur (27) élastique.

7. Dispositif de connexion selon la revendication 6,
**caractérisé en ce que** ledit revêtement extérieur (27) épouse la surface extérieure de ladite rotule (24).

8. Dispositif de connexion selon la revendication 6,
**caractérisé en ce que** ledit revêtement extérieur (27), solidaire de ladite rotule (24), est séparée de la surface extérieure de celle-ci par un jeu (37).

9. Dispositif de connexion selon l'une des revendications 2 à 4,
**caractérisé en ce que** ladite rotule (24) porte un joint diamétral (40) coopérant avec la paroi interne (23C) de ladite chambre (23).

10. Dispositif de connexion selon l'une des revendications 2 à 9,
**caractérisé en ce que** ladite rotule creuse (24) fait partie d'une pièce (35), rapportée à l'extrémité avant (10A) de ladite conduite (10).

11. Dispositif de connexion selon l'une des revendications 2 à 10,
**caractérisé en ce que** ladite chambre cylindrique (23) comporte des moyens (36, 42, 43, 44) pour sa fixation et celle dudit injecteur (12), sur ladite cloison interne (20).

12. Dispositif de connexion selon la revendication 11,
**caractérisé en ce que** la fixation de ladite chambre cylindrique (23) sur ladite cloison interne (20) est rigide.

13. Dispositif de connexion selon la revendication 11,
**caractérisé en ce que** la chambre cylindrique (23) est montée longitudinalement flottante par rapport à ladite cloison interne (20).

14. Capot d'entrée d'air (9) pour moteur à réaction (1), notamment pour aéronef, ledit capot d'entrée d'air (9) étant pourvu de moyens de dégivrage de son bord d'attaque (16) et comportant à cet effet :
- un bord d'attaque (16) creux délimitant une chambre périphérique interne (21), fermée par une cloison interne (20) et pourvue d'au moins un orifice (18) mettant en communication ladite chambre interne (21) avec l'extérieur ; et
- une conduite (10), apte à être raccordée, à son extrémité arrière (10B) opposée audit bord d'attaque (16), à un circuit d'air chaud sous pression (14) et, à son extrémité avant (10A) vers ledit bord d'attaque (16), à un injecteur (12) injectant ledit air chaud sous pression dans ladite chambre interne (21),
**caractérisé en ce que**, pour raccorder ledit injecteur (12) à ladite conduite (10), il comporte un dispositif de connexion constitué par un joint à rotule (22) permettant des variations de positions longitudinales et angulaires de ladite conduite (10) par rapport audit injecteur (12).

15. Capot d'entrée d'air (9) selon la revendication 14,
**caractérisé en ce que** ledit dispositif de connexion comporte les particularités spécifiées sous l'une quelconque des revendications 2 à 13.

16. Capot d'entrée d'air (9) selon l'une des revendications 14 ou 15,
**caractérisé en ce que** l'extrémité arrière (10B) de ladite conduite (10) apte à être raccordée audit circuit d'air chaud (14), est fixée en position sur une autre cloison interne (28) dudit capot.

17. Capot d'entrée d'air (9) selon la revendication 16,
**caractérisé en ce que** ladite extrémité arrière (10B) de la conduite (10) est fixée rigidement sur ladite autre cloison interne (28).

18. Capot d'entrée d'air (9) selon la revendication 16,
**caractérisé en ce que** ladite extrémité arrière (10B) de la conduite (10) est fixée de façon à pouvoir coulisser longitudinalement par rapport à ladite autre cloison interne (28).

19. Capot d'entrée d'air (9) selon l'une des revendications 16 à 18,
**caractérisé en ce que** ladite extrémité arrière (10B) de ladite conduite (10) est solidaire d'une autre pièce rapportée (34) comportant des moyens (29, 41) de fixation à ladite autre cloison interne (28) et des moyens de raccord (11) audit circuit d'air chaud (14).

## Claims

1. A connection device (22) that is airtight to pressurized hot air, for an air inlet cowl (9) of a jet engine (1), particularly for an aircraft, said air inlet cowl (9) being equipped with means for deicing its leading edge (16) and comprising for this purpose:
- a hollow leading edge (16) delimiting an internal peripheral chamber (21) closed by an internal partition (20) and equipped with at least one orifice (18) placing said internal chamber (21) in communication with the outside; and
- a pipe (10) which can be connected, at its rear end (10B) away from said leading edge (16), to a pressurized hot air circuit (14) and, at its front end (10A) toward said leading edge (16), to an injector (12) injecting said pressurized hot air into said internal chamber (21),
said airtight connection device (22) being designed to connect said pipe (10) to said injector (12),
**characterized in that** the connection device consists of a ball joint (22) allowing variations in the longitudinal and angular positions of said pipe (10) with respect to said injector (12).

2. The connection device as claimed in claim 1,
**characterized in that** it comprises:
- a cylindrical chamber (23), open at both ends (23A, 23B) and secured to said injector (12) at its front end (23A); and
- a hollow ball (24), secured to the front end (10A) of said pipe (10) and tightly fitted into said cylindrical chamber (23) through the rear end (23B) thereof.

3. The connection device as claimed in claim 2,
**characterized in that** the cylindrical internal wall (23C) of said chamber (23), against which said ball is pressed, is coated with an antifriction coating (26).

4. The connection device as claimed in claim 3,
**characterized in that** said antifriction coating (26) is borne by a ring (25) mounted removably in said cylindrical chamber (23).

5. The connection device as claimed in one of claims 2 to 4,
**characterized in that** said ball (24) is made of a slightly elastic metallic material.

6. The connection device as claimed in one of claims 2 to 4,
**characterized in that** said ball (24) is made of a rigid metallic material and bears an elastic external coating (27).

7. The connection device as claimed in claim 6,
**characterized in that** said external coating (27) hugs the exterior surface of said ball (24).

8. The connection device as claimed in claim 6,
**characterized in that** said external coating (27) secured to said ball (24) is separated from the exterior surface thereof by a clearance (37).

9. The connection device as claimed in one of claims 2 to 4,
**characterized in that** said ball (24) bears a diametral seal (40) cooperating with the internal wall (23C) of said chamber (23).

10. The connection device as claimed in one of claims 2 to 9,
**characterized in that** said hollow ball (24) forms part of a piece (35), attached to the front end (10A) of said pipe (10).

11. The connection device as claimed in one of claims 2 to 10,
**characterized in that** said cylindrical chamber (23) comprises means (36, 42, 43, 44) for attaching it and said injector (12) to said internal partition (20).

12. The connection device as claimed in claim 11,
**characterized in that** the attachment of said cylindrical chamber (23) to said internal partition (20) is rigid.

13. The connection device as claimed in claim 11,
**characterized in that** the cylindrical chamber (23) is mounted with longitudinal float with respect to said internal partition (20).

14. An air inlet cowl (9) for a jet engine (1), particularly for an aircraft, said air inlet cowl (9) being equipped with means for deicing its leading edge (16) and comprising for this purpose:
- a hollow leading edge (16) delimiting an internal peripheral chamber (21) closed by an internal partition (20) and equipped with at least one orifice (18) placing said internal chamber (21) in communication with the outside; and
- a pipe (10) which can be connected, at its rear end (10B) away from said leading edge (16), to a pressurized hot air circuit (14) and, at its front end (10A) toward said leading edge (16), to an injector (12) injecting said pressurized hot air into said internal chamber (21),
**characterized in that**, in order to connect said injector (12) to said pipe (10), this cowl comprises a connection device which consists of a ball joint (22) allowing variations in the longitudinal and angular positions of said pipe (10) with respect to said injector (12).

15. The air inlet cowl (9) as claimed in claim 14,
**characterized in that** said connection device has the features specified in any one of claims 2 to 13.

16. The air inlet cowl (9) as claimed in either of claims 14 and 15, **characterized in that** the rear end (10B) of said pipe (10) which can be connected to said hot air circuit (14) is fixed in position on another internal partition (28) of said cowl.

17. The air inlet cowl (9) as claimed in claim 16,
**characterized in that** said rear end (10B) of the pipe (10) is fixed rigidly to said other internal partition (28).

18. The air inlet cowl (9) as claimed in claim 16,
**characterized in that** said rear end (10B) of the pipe (10) is fixed in such a way that it can slide longitudinally with respect to said other internal partition (28).

19. The air inlet cowl (9) as claimed in one of claims 16 to 18,
**characterized in that** said rear end (10B) of said pipe (10) is secured to another attached piece (34) comprising means (29, 41) of attachment to said other internal partition (28) and means (11) of connection to said hot air circuit (14).

## Patentansprüche

1. Heißdruckluftdichte Verbindungsvorrichtung (22) für einen Lufteinlauf (9) eines Strahltriebwerks (1), insbesondere für Flugzeuge, wobei der genannte Lufteinfauf (9) mit Mitteln zur Enteisung seiner Eintrittskante (16) versehen ist und zu diesem Zweck folgendes umfasst:
- eine hohle Eintrittskante (16), die eine Umfangsinnenkammer (21) begrenzt, die durch eine Innentrennwand (20) verschlossen und mit mindestens einer Öffnung (18) versehen ist, die die genannte Innenkammer (21) mit der Außenumgebung verbindet, und
- eine Leitung (10), die an ihrem hinteren, entgegengesetzt zur genannten Eintrittskante (16) liegenden Ende (10B) mit einem Heißdruckluftkreis (14) und an ihrem vorderen Ende (10A) zur genannten Eintrittskante (16) hin mit einer Einspritzdüse (12) verbunden werden kann, die die genannte heiße Druckluft in die genannte Innenkammer (21) einspritzt,
wobei die genannte dichte Verbindungsvorrichtung (22) vorgesehen ist, um die genannte Leitung (10) an der genannten Einspritzdüse (12) anzuschliessen,
**dadurch gekennzeichnet, dass** es durch ein Universalgelenk (22) gebildet wird, das Änderungen der Längs- und Winkellagen der genannten Leitung (10) in Bezug auf die genannte Einspritzdüse (12) ermöglicht.

2. Verbindungsvorrichtung gemäss Anspruch 1,
**dadurch gekennzeichnet, dass** sie folgendes umfasst:
- eine zylindrische Kammer (23), die an ihren beiden Enden (23A, 23B) offen und mit der genannten Einspritzdüse (12) an ihrem vorderen Ende (23A) fest verbunden ist; und
- eine hohle Gelenkkugel (24), die am vorderen Ende (10A) fest mit der genannten Leitung (10) verbunden und über harte Reibung in die genannte zylindrische Kammer (23) über deren hinteres Ende (23B) eingesteckt ist.

3. Verbindungsvorrichtung gemäss Anspruch 2,
**dadurch gekennzeichnet, dass** die zylindrische Innenwand (23C) der genannten Kammer (23), gegen die die genannte Gelenkkugel gedrückt wird, mit einer Antifriktionsbeschichtung (26) versehen ist.

4. Verbindungsvorrichtung gemäss Anspruch 3,
**dadurch gekennzeichnet, dass** sich die genannte Antifriktionsbeschichtung (26) auf einem Ring (25) befindet, der abnehmbar in der genannten zylindrischen Kammer montiert ist.

5. Verbindungsvorrichtung gemäss einem der Ansprüche 2 bis 4,
**dadurch gekennzeichnet, dass** die genannte Gelenkkugel (24) aus einem metallischen, leicht elastischen Material gefertigt ist.

6. Verbindungsvorrichtung gemäss einem der Ansprüche 2 bis 4,
**dadurch gekennzeichnet, dass** die genannte Gelenkkugel (24) aus einem starren metallischen Material gefertigt ist und eine elastische Außenbeschichtung (27) trägt.

7. Verbindungsvorrichtung gemäss Anspruch 6,
**dadurch gekennzeichnet, dass** die genannte Außenbeschichtung (27) auf der Außenfläche der genannten Gelenkkugel (24) aufgebracht ist.

8. Verbindungsvorrichtung gemäss Anspruch 6,
**dadurch gekennzeichnet, dass** die genannte Außenbeschichtung (27), die fest mit der genannten Gelenkkugel (24) verbunden ist, durch ein Spiel (37) von deren Außenfläche getrennt ist.

9. Verbindungsvorrichtung gemäss einem der Ansprüche 2 bis 4,
**dadurch gekennzeichnet, dass** die genannte Gelenkkugel (24) eine diametrale Dichtung trägt, die mit der Innenwand (23C) der genannten Kammer (23) zusammenwirkt.

10. Verbindungsvorrichtung gemäss einem der Ansprüche 2 bis 9,
**dadurch gekennzeichnet, dass** die genannte hohle Gelenkkugel (24) Bestandteil eines Teils (35) ist, das auf das vordere Ende (10A) der genannten Leitung (10) aufgesetzt ist.

11. Verbindungsvorrichtung gemäss einem der Ansprüche 2 bis 10,
**dadurch gekennzeichnet, dass** die genannte zylindrische Kammer (23) Mittel (36, 42, 43, 44) zu ihrer Befestigung und zur Befestigung der genannten Einspritzdüse (12) an der genannten Innentrennwand (20) umfasst.

12. Verbindungsvorrichtung gemäss Anspruch 11,
**dadurch gekennzeichnet, dass** die Befestigung der genannten zylindrischen Kammer (23) an der genannten Innentrennwand (20) starr ist.

13. Verbindungsvorrichtung gemäss Anspruch 11,
**dadurch gekennzeichnet, dass** die zylindrische Kammer (23) in Bezug auf die genannte Innentrennwand (20) in Längsrichtung gleitend montiert ist.

14. Lufteinlauf (9) für Strahltriebwerke (1), insbesondere für Flugzeuge, wobei der genannte Lufteinlauf (9) mit Mitteln zur Enteisung seiner Eintrittskante (16) versehen ist und zu diesem Zweck folgendes umfasst:
- eine hohle Eintrittskante (16), die eine Umfangsinnenkammer (21) begrenzt, die durch eine Innentrennwand (21) verschlossen und mit mindestens einer Öffnung (18) versehen ist, die die genannte Innenkammer (21) mit der Außenumgebung verbindet, und
- eine Leitung (10), die an ihrem hinteren, entgegengesetzt zur genannten Eintrittskante (16) liegenden Ende (10B) mit einem Heißdruckluftkreis (14) und an ihrem vorderen Ende (10A) zur genannten Eintrittskante (16) hin mit einer Einspritzdüse (12) verbunden werden kann, die die genannte heiße Druckluft in die genannte Innenkammer (21) einspritzt,
**dadurch gekennzeichnet, dass** dieser Lufteinlauf zum Anschluß der genannten Einspritzdüse (12) an der genannten Leitung (10) eine Verbindungsvorrichtung umfasst, die aus einem Universalgelenk (22) besteht, das Änderungen der Längs- und Winkelfagen der genannten Leitung (10) in Bezug auf die genannte Einspritzdüse (12) gestattet.

15. Lufteinlauf (9) gemäss Anspruch 14,
**dadurch gekennzeichnet, dass** die genannte Verbindungsvorrichtung die unter einem beliebigen der Ansprüche 2 bis 13 spezifizierten Besonderheiten besitzt.

16. Lufteinlauf (9) gemäss einem der Ansprüche 14 oder 15,
**dadurch gekennzeichnet, dass** das hintere Ende (10B) der genannten Leitung (10), die an den genannten Heißluftkreis (14) angeschlossen werden kann, in Position an einer weiteren Innentrennwand (28) des genannten Einlaufs lagebefestigt ist.

17. Lufteinlauf (9) gemäss Anspruch 16,
**dadurch gekennzeichnet, dass** das genannte hintere Ende (10B) der Leitung (10) starr an der genannten weiteren Innentrennwand (28) befestigt ist.

18. Lufteinlauf (9) gemäss Anspruch 16,
**dadurch gekennzeichnet, dass** das genannte hintere Ende (10B) der Leitung (10) so befestigt ist, dass es in Längsrichtung in Bezug auf die genannte weitere Innentrennwand (28) gleiten kann.

19. Lufteinlauf (9) gemäss einem der Ansprüche 16 bis 18,
**dadurch gekennzeichnet, dass** das genannte hintere Ende (10B) der genannten Leitung (10) fest mit einem anderen aufgesteckten Teil (34) verbunden ist, das Mittel (29, 41) zur Befestigung an der genannten weiteren Innentrennwand (28) und Mittel zum Anschluss (11) an den genannten Heißluftkreis (14) umfasst.
